# EUROPEAN PATENT APPLICATION

(11) **EP 2 653 762 A1**
(43) Date of publication of application: **23.10.2013**
(21) Application number: 11849022.6
(22) Date of filing: 13.12.2011
(51) Int. Cl.: F16K 37/00, F16K 31/04, G01D 5/347

(54) **FLUID CONTROL VALVE**

(30) Priority: 13.12.2010 JP 2010276498
(71) Applicant: Panasonic Corporation, Osaka 571-8501 (JP)
(72) Inventor: NAKAI, Hiroshi, Osaka 540-6207 (JP); MORIHANA, Hideaki, Osaka 540-6207 (JP); NAGANUMA, Naoto, Osaka 540-6207 (JP); SHIBA, Fumikazu, Osaka 540-6207 (JP); SUGIYAMA, Masaki, Osaka 540-6207 (JP)
(74) Representative: Schwabe - Sandmair - Marx
(86) International application number: PCT/JP2011/006939
(87) International publication number: WO 2012/081228

(57) **Abstract**

A flow control valve includes a light emitting section (22) for emitting light; a light receiving section (24) disposed so as to face the light emitting section (22), for detecting the amount of light received from the light emitting section (22); and a valve element (10) for opening and closing a passage (20), wherein the valve element (10) or a light blocking section (12) secured to the valve element (10) moves in a transverse direction between the light emitting section (22) and the light receiving section (24) as the passage (20) is opened or closed, an amount of light received by the light receiving section (24) from the light emitting section (22) varies in accordance with the position of the valve element (10), and a position of the valve element (10) is detected based on the amount of light received by the light receiving section (24).

## Description

### Technical Field

The present invention relates to a flow control valve. More particularly, the present invention relates to a flow control valve capable of detecting a position of a valve element.

### Background Art

Patent Literature 1 discloses a flow control valve. This flow control valve includes a stator having a coil; a rotor that is rotated by excitation caused by supplying of an electric current to the coil; a rotary shaft for the rotor; a partition wall placed between the stator and the rotor; a means for detecting a rotational position of the rotor; a converter means that is stopped in an engaged manner with the rotary shaft of the rotor, for converting a rotating motion of the rotor into a linear motion; a valve element that is stopped in an engaged manner with the converter means, for opening and closing a passage; and a means for detecting the position of the valve element. As the means for detecting the position of the valve element, a configuration including a magnetic detecting means is disclosed.

### Citation List

### Patent Literature

Patent Literature 1: JP-A-2001-141094

### Summary of Invention

### Technical Problem

An object of the invention is to provide a flow control valve capable of detecting a position of a valve element with a method which was not implemented conventionally.

### Solution to Problem

The conventional configuration using a magnetic detecting means as the means for detecting the position of the valve element cannot be used in some cases, depending upon a passage in which the valve is provided, the configuration of its peripheral devices, and the like. Therefore, the inventors have conducted intensive research to provide a flow control valve capable of detecting the position of the valve element with the method which was not implemented conventionally.

As the result, the inventors have found that, in a flow control valve including a light emitting section and a light receiving section for receiving light from the light emitting section, the position of the valve element can be detected by changing, as the valve element moves, a degree of blocking of the light received by the light receiving section from the light emitting section.

According to the invention, there is provided a flow control valve comprising: a light emitting section for emitting light; a light receiving section disposed so as to face the light emitting section, for detecting an amount of light received from the light emitting section; and a valve element for opening and closing a passage; wherein the valve element or a light blocking section secured to the valve element moves in a transverse direction between the light emitting section and the light receiving section, as the passage is opened or closed, and the amount of light received by the light receiving section from the light emitting section varies in accordance with a position of the valve element, and the position of the valve element is detected based on the amount of light received by the light receiving section.

The above configuration makes it possible to provide a flow control valve capable of detecting the position of the valve element with a method which was not implemented conventionally.

According to the invention, there is provided a method for controlling the above flow control valve, comprising: a first step of causing the light emitting section to emit light and detecting the position of the valve element based on the amount of light received by the light receiving section; a second step of cutting off supply of electric power to the light emitting section, subsequently to the first step; a third step of starting supply of electric power to an actuator connected to the valve element to actuate the valve element, subsequently to the second step; a fourth step of cutting off the supply of electric power to the actuator, subsequently to the third step; and a fifth step of causing the light emitting section to emit light and detecting the position of the valve element based on the amount of light received by the light receiving section, subsequently to the fourth step.

The above method makes it possible to reduce power consumption caused by valve control.

In the flow control valve, the valve element may have the light blocking section formed so as to project along a moving direction of the valve element; and the light blocking section may move between the light emitting section and the light receiving section, as the passage is opened or closed, the amount of light received by the light receiving section from the light emitting section varies in accordance with the position of the valve element, and the position of the valve element may be detected based on the amount of light received by the light receiving section.

A method of controlling the flow control valve may further comprise a fifth step of actuating the valve element by transmitting a pulse for closing the passage to a stepping motor connected to the valve element; a sixth step of detecting the position of the valve element based on the amount of light received by the light receiving section subsequently to the fifth step; a seventh step of determining whether the position of the valve element detected at the sixth step is a position where the passage is closed; and an eighth step for actuating the valve element by transmitting a pulse for closing the passage again to the stepping motor if a result of the determination made at the seventh step is NO.

A method of controlling the flow control valve may further comprise a fifth step for actuating the valve element by transmitting a pulse for closing the passage to a stepping motor connected to the valve element; a sixth step for detecting the position of the valve element based on the amount of light received by the light receiving section, subsequently to the fifth step; a seventh step for determining whether the position of the valve element detected at the sixth step is a position where the passage is closed; and a ninth step for actuating the valve element by transmitting a pulse for closing the passage again to the stepping motor after decreasing a frequency of the pulse to a value lower than a value of a frequency of the pulse transmitted in the fifth step, if a result of the determination made at the seventh step is NO.

In the above flow control valve, the light blocking section may be tapered to have a reduced dimension in a moving direction of the valve element to continuously vary the amount of light received by the light receiving section from the light emitting section in accordance with the position of the valve element, and as a result, the position of the valve element may be continuously detected from its fully open state to its fully closed state based on the amount of light received by the light receiving section.

In the above flow control valve, the light blocking section may have a plurality of holes aligned in a moving direction of the valve element such that the amount of light received by the light receiving section from the light emitting section alternately takes a maximal value and a minimal value, and as a result, the position of the valve element may be continuously detected from its fully open state to its fully closed state based on the amount of light received by the light receiving section.

### Advantageous Effects of Invention

The flow control valve of the present invention has an advantage that it is possible to detect a position of a valve element with a method which was not implemented conventionally

### Brief Description of Drawings

Fig. 1 is a diagram showing one example of a schematic configuration of a flow control valve according to an example of a first embodiment, wherein Fig. 1A shows an open state whereas Fig. 1B shows a closed state.
Fig. 2 is a plan view when the flow control valve according to the example of the first embodiment is viewed from an axial direction of a passage.
Fig. 3 is a diagram showing one example of a schematic configuration of a flow control valve according to a first modification of the first embodiment, wherein Fig. 3A shows an open state whereas Fig. 3B shows a closed state.
Fig. 4 is a diagram showing one example of a schematic configuration of a flow control valve according to a second modification of the first embodiment, wherein Fig. 4A shows an open state whereas Fig. 4B shows a closed state.
Fig. 5A is a diagram showing one example of a schematic configuration of a light blocking section included in a flow control valve according to a third modification of the first embodiment, and Fig. 5B is a diagram showing one example of a schematic configuration of a light blocking section included in a flow control valve according to a fourth modification of the first embodiment.
Fig. 6 is a flow chart showing one example of a control method for a flow control valve according to a second embodiment.
Fig. 7 is a flow chart showing one example of a control method for a flow control valve according to a third embodiment.
Fig. 8 is a flow chart showing one example of a control method for a flow control valve according to a modifcation of the third embodiment.

### Description of Embodiments

### First Embodiment

### [Device Configuration]

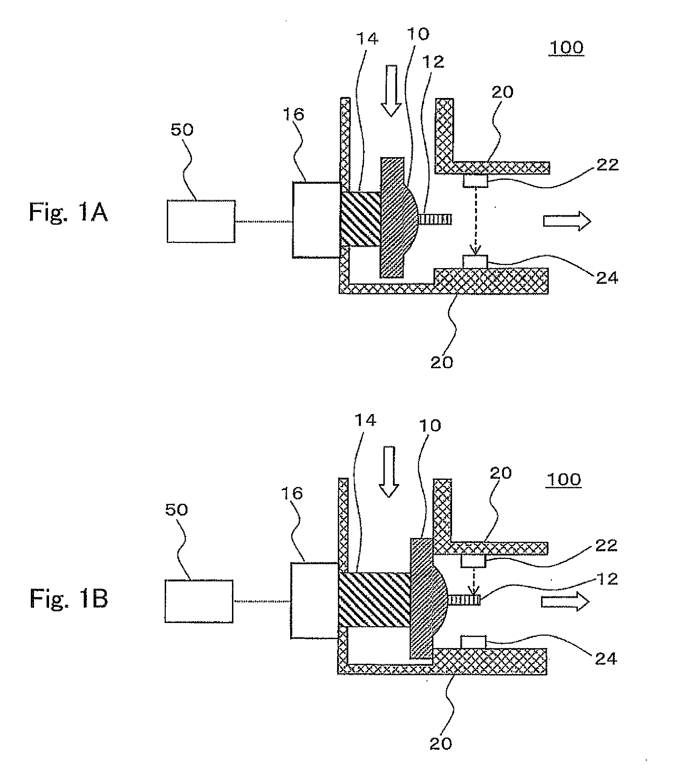

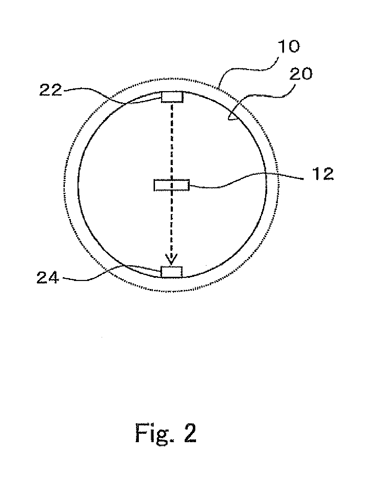

Fig. 1 is a diagram showing one example of the schematic configuration of a flow control valve according to an example of a first embodiment, wherein Fig. 1A shows an open state whereas Fig. 1B shows a closed state. Fig. 2 is a plan view when the flow control valve according to the example of the first embodiment is viewed from an axial direction of a passage. Referring now to Figs. 1 and 2, a flow control valve according to the first embodiment will be described.

It should be understood that reference numerals are merely provided for the purpose of showing the correspondence between the embodiment and its example and the flow control valve of this embodiment is not limited to the configuration shown in Fig. 1. The same is applied to other embodiments described later.

As illustrated in Fig. 1, the flow control valve of the first embodiment includes a light emitting section 22 for emitting light, a light receiving section 24 disposed so as to face the light emitting section 22, for detecting an amount of light received from the light emitting section 22, and a valve element 10 for opening and closing a passage 20. As the passage 20 is opened or closed, the valve element 10 or a light blocking section 12 secured to the valve element 10 moves in a transverse direction between the light emitting section 22 and the light receiving section 24, so that the amount of light received by the light receiving section 24 from the light emitting section 22 varies in accordance with the position of the valve element 10, and thus, the position of the valve element 10 is detected based on the amount of light received by the light receiving section 24.

The above configuration makes it possible to provide a flow control valve capable of detecting the position of the valve element with a method which was not implemented conventionally.

The valve element 10 may be of any shape as long as it can open and close the passage 20. The valve element 10 may be made of any material that is generally used for making a fluid valve.

The light blocking section 12 may be omitted (see the first modification).

As the light emitting section 22, for example, a light emitting element such as a light emitting diode or semiconductor laser may be used. As the light receiving section 24, for example, a light sensor such as a photoresistor, photodiode or phototube may be used. It is also possible to use a commercially available photointerrupter as the light emitting section 22 and the light receiving section 24 (see the second modification).
In the open state exemplified in Fig. 1A, the light emitted from the light emitting section 22 reaches the light receiving section 24 without being blocked by the light blocking section 12 or the valve element 10. On the other hand, in the closed state exemplified in Fig. 1B, the light emitted from the light emitting section 22 is blocked by the light blocking section 12, so that it does not reach the light receiving section 24. The flow control valve is able to detect the position of the valve element 10 based on a difference in the amount of blocked light (i.e., the difference in the amount of light received by the light receiving section 24). It should be noted that, in the closed state, all of the light is not necessarily be blocked but part of the light may be allowed to pass through. An alternative configuration is such that the light is blocked in the open state and is not blocked in the closed state, for example, by adjusting the shapes of the light blocking section 12 and the valve element 10. In either configuration, it is desirable that the degree of blocking of light by the valve element 10 or the light blocking section 12 be varied in accordance with the difference in the position of the valve element 10. The fully open state and fully closed state of the valve need not be detected but intermediate states between these states may be detected (see e.g., the third and fourth modifications).

Although the information about the amount of light detected by the light receiving section 24 is transmitted to and processed by some kind of controller, a subject that executes this process is not limited to particular devices. For instance, in cases where a controller 50 for controlling an actuator 16 of the valve element 10 is provided as illustrated in Fig. 1A, this controller 50 may include the function of processing such information. Alternatively, another controller (position detection controller) for detecting the position of the valve element 10 may be provided independently of the controller 50.

Control may be performed such that electric power is supplied to the light emitting section 22 to cause light emission of the light emitting section 22 or the supply of electric power to the light emitting section 22 is cut off to stop the light emission of the light emitting section 22. In cases where a controller 50 for controlling an actuator 16 of the valve element 10 is provided as illustrated in Fig. 1A for instance, the above control may be performed by the controller 50. Alternatively, another controller (light emission controller) for controlling the light emitting section 22 may be provided independently of the controller 50.

In cases where the controller 50 for controlling the actuator 16 of the valve element 10 is provided as illustrated in Fig. 1A, a single controller may be used as a common controller which functions as the controller 50, the position detection controller and the light emission controller in desired combinations. The controller may be provided independently of the flow control valve. The controller may be constituted by, for example, a centralized controller having a single CPU or a decentralized controller having a plurality of CPUs. The flow control valve of this embodiment may be configured to detect the position of the valve element 10 based on the amount of light received by the light receiving section 24 and does not necessarily include a controller.

The valve element 10 may be actuated by any method. A drive shaft 14 for connecting the actuator 16 and the valve element 10 to each other as shown in Fig. 1A is not indispensable.

Although the flow control valve is disposed in a bent portion of the passage in Fig. 1, it may be disposed, for example, somewhere in a linear portion of the passage.

### Example

Referring now to Figs. 1 and 2, a concrete configuration of a flow control valve 100 according to an example of the first embodiment will be described in detail.

The flow control valve 100 is located at a bent portion of the passage 20. In the passage 20, a fluid (which is suitably gas) flows in the direction of white arrow shown in Fig. 1A.

The flow control valve 100 includes the valve element 10 including a convex portion which swells from a center portion thereof facing the passage; the light blocking section 12 secured to the valve element 10 so as to project from the convex portion toward the passage; the drive shaft 14 for retaining and driving the valve element 10; the actuator 16 coupled to the drive shaft 14; and the controller 50 which is electrically connected to the actuator 16. At an inner wall of a portion of the passage 20 located downstream of the valve element 10, the light emitting section 22 and the light receiving section 24 are arranged such that these sections 22, 24 face each other and a straight line connecting them passes through a central axis of the passage 20. In this example, the controller 50 is connected to the light emitting section 22 and the light receiving section 24, so that the controller 50 executes the control of the light emission of the light emitting section 22 and the detection of the position of the valve element 10 based on the amount of light received by the light receiving section 24.

As shown in Fig.2, the cross-section of the passage 20 taken along a plane perpendicular to the axial direction of the passage 20 is circular in shape. The light blocking section 12 has such a shape that its thickness in the direction of the straight line that connects the light emitting section 22 and the light receiving section 24 to each other is shorter than its width perpendicular to the straight line. The above configuration makes it possible to ensure the blocking of light by the light blocking section 12 while reducing a resistance of the light blocking section 12 with respect to the flow of the fluid.

As shown in Figs. 1 and 2, a portion of the passage 20 which is downstream of the valve element 10 is stepped such that a narrower portion with a smaller inside diameter is formed. The valve element 10 is greater in diameter than the narrower portion of the passage 20. Therefore, the valve is closed when a peripheral portion of the valve element 10 comes into contact with the stepped portion.

The actuator 16 is a stepping motor that is digitally controlled by the controller 50. The drive shaft 14 is a ball screw, and a thread groove is formed at a position where the drive shaft 14 penetrates the passage 20. In such a configuration, while the actuator 16 rotates clockwise or counterclockwise, under control of the controller 50, the drive shaft 14 and the valve element 10 move forward or backward in a rightward and leftward direction of Fig. 1 in accordance with the direction and amount of the rotation.

The positional relationship between the light emitting section 22/the light receiving section 24 and the light blocking section 12 is set such that when the valve element 10 fully opens the passage 20 (i.e., fully open state: Fig. 1A), the light emitted from the light emitting section 22 reaches the light receiving section 24 without being blocked by the light blocking section 12 at all, while when the valve element 10 fully closes the passage 20 (i.e., fully closed state: Fig. 1B), the light from the light emitting section 22 is completely blocked by the light blocking section 12, so that it does not reach the light receiving section 24.

In the above configuration, if the amount of light received by the light receiving section 24 from the light emitting section 22 is a maximum value, it is determined that the valve element 10 is at the position where the valve element 10 fully opens the passage 20 (the position of the valve element 10 shown in Fig. 1A). On the other hand, if the amount of light received by the light receiving section 24 from the light emitting section 22 is zero, it is determined that the valve element 10 is at the position where it fully closes the passage 20 (i.e., the position of the valve element 10 shown in Fig. 1B). In this way, the flow control valve 100 can detect the position of the valve element in the above configuration.

The result of the positional detection of the valve element 10 may be utilized in the control for the actuator 16 as described in the second and third embodiments, or the result may be alternatively outputted by a separate output means to be checked by the user, irrelevantly of the control for the actuator 16. That is, how the result of the positional detection is utilized is not particularly limited.

### (First Modification)

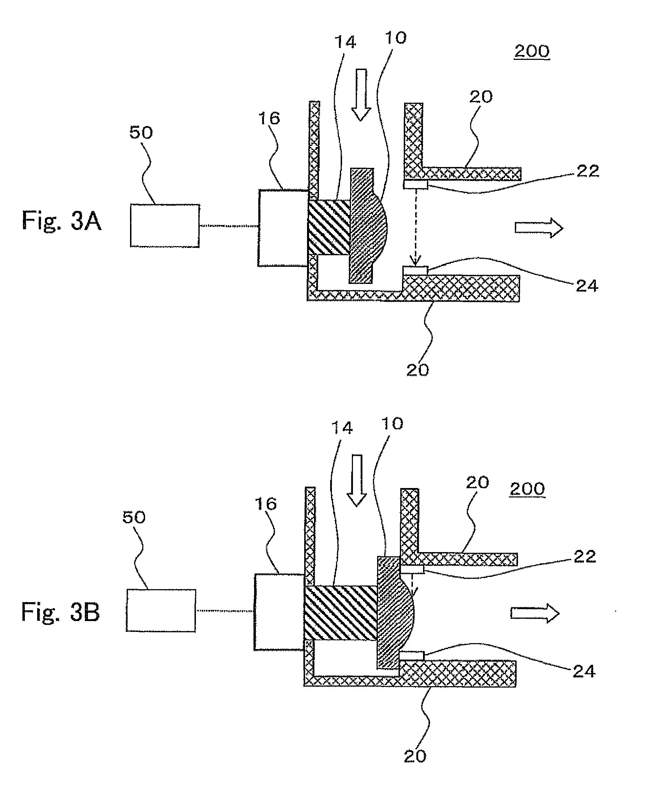

Fig. 3 is a diagram showing one example of a schematic configuration of a flow control valve according to a first modification of the first embodiment, wherein Fig. 3A shows an open state whereas Fig. 3B shows a closed state.

A flow control valve 200 according to the first modification has the same configuration as that of the flow control valve 100 except that the light blocking section 12 is eliminated and the light emitting section 22 and the light receiving section 24 are shifted to a position which is downstream of and in close proximity to the position where the valve element 10 closes the passage 20. Therefore, those constituent elements common to the flow control valve 100 and the flow control valve 200 are represented by the same reference numerals and names and a detailed description thereof will not be given in repetition.

The flow control valve 200 is configured such that the valve element 10 itself which is in the fully closed state, rather than the light blocking section 12, blocks the light received by the light receiving section 24 from the light emitting section 22.

The positional relationship between the light emitting section 22/the light receiving section 24 and the valve element 10 is set such that when the valve element 10 fully opens the passage 20 (i.e., fully open state: Fig. 3A), the light from the light emitting section 22 reaches the light receiving section 24 without being blocked at all by a convex portion formed at the center of the valve element 10, while when the valve element 10 fully closes the passage 20 (i.e., fully closed state: Fig. 3B), the light from the light emitting section 22 is completely blocked by the convex portion, so that it does not reach the light receiving section 24.

In the above configuration, if the amount of light received by the light receiving section 24 from the light emitting section 22 is a maximum value, it is determined that the valve element 10 is at the position where the valve element 10 fully opens the passage 20 (the position of the valve element 10 shown in Fig. 3A). On the other hand, if the amount of light received by the light receiving section 24 from the light emitting section 22 is zero, it is determined that the valve element 10 is at the position where it fully closes the passage 20 (i.e., the position of the valve element 10 shown in Fig. 3B). In this way, the flow control valve 200 can detect the position of the valve element in the above configuration.

The above-described modified arrangement and the same control method as that of the example of the first embodiment are applicable to the first modification.

### (Second Modification)

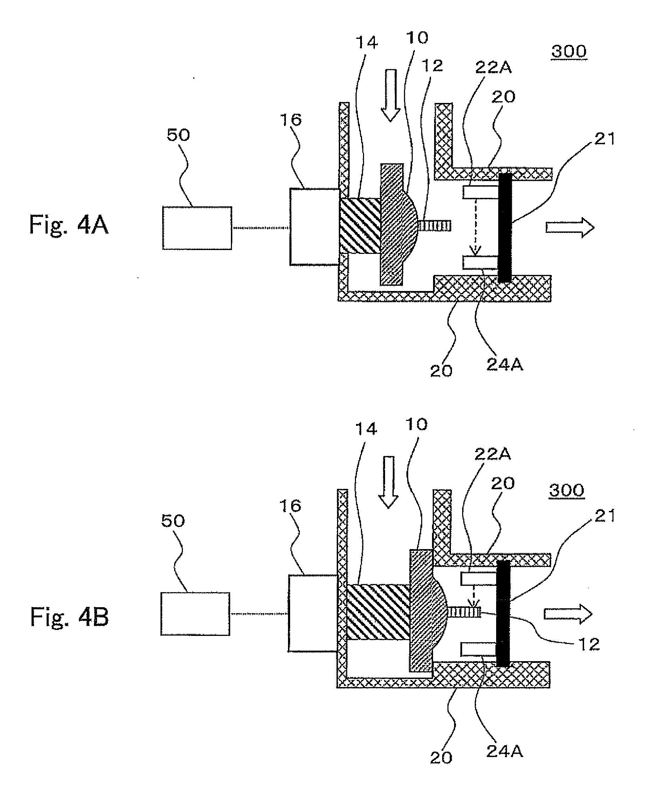

Fig. 4 is a diagram showing one example of a schematic configuration of a flow control valve according to a second modification of the first embodiment, wherein Fig. 4A shows an open state whereas Fig. 4B shows a closed state.

A flow control valve 300 according to the second modification has the same configuration as that of the flow control valve 100 except that the light emitting section 22 and the light receiving section 24 are replaced by a photointerrupter 21 that is a general-purpose product. Those constituent elements common to the flow control valve 100 and the flow control valve 300 are represented by the same reference numerals and names and a detailed description thereof will not be given in repetition.

As the photointerrupter 21, for example, a commercially available photointerrupter may be used. The photointerrupter 21 includes a light emitting section 22A and a light receiving section 24A. The functions of the light emitting section 22A and the light receiving section 24A are the same as those of the light emitting section 22 and the light receiving section 24 and therefore a detailed description thereof will not be given in repetition.

The positional relationship between the light emitting section 22A/the light receiving section 24A and the light blocking section 12 is set such that when the valve element 10 fully opens the passage 20 (i.e., fully open state: Fig. 4A), the light from the light emitting section 22A reaches the light receiving section 24A without being blocked by the light blocking section 12 at all, while when the valve element 10 fully closes the passage 20 (i.e., fully closed state: Fig. 4B), the light from the light emitting section 22A is completely blocked by the light blocking section 12, so that it does not reach the light receiving section 24A.

As the operation of the flow control valve 300, the operation described in the example of the first embodiment may be adopted without change, only by replacing the light emitting section 22 and the light receiving section 24 by the light emitting section 22A and the light receiving section 24A, and therefore a detailed description thereof will not be given in repetition.

The second modification has the same advantage as that of the example of the first embodiment. In the second modification, a general-purpose photointerrupter can be used in the place of the light emitting section 22 and the light receiving section 24, and therefore manufacturing cost can be reduced.

The above-described alternation and the same control method as of the example of the first embodiment are applicable to the second modification. The second modification may be combined with the first modification.

### (Third Modification and Fourth Modification)

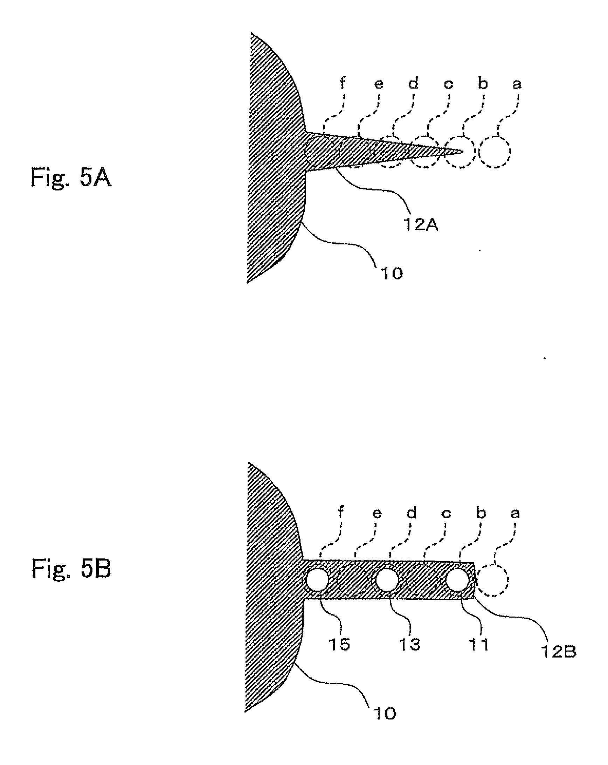

Fig. 5A is a diagram showing one example of a schematic configuration of a light blocking section included in a flow control valve according to a third modification of the first embodiment, and Fig. 5B is a diagram showing one example of a schematic configuration of a light blocking section included in a flow control valve according to a fourth modification of the first embodiment.

The flow control valve according to the third modification has the same configuration as that of the flow control valve 100 of the example of the first embodiment except that the light blocking section 12 is replaced by a light blocking section 12A that is different in shape. Those constituent elements common to the flow control valve of the third modification and the flow control valve 100 are represented by the same reference numerals and names and a detailed description thereof will not be given in repetition.

The flow control valve of the third modification is configured such that the light blocking section 12A is tapered to have a reduced dimension in the moving direction of the valve element 10 so that the amount of light received by the light receiving section 24 from the light emitting section 22 can be varied in a continuous manner according to the position of the valve element 10. This makes it possible to continuously detect the position of the valve element 10 from its fully open state to its fully closed state based on the amount of light received by the light receiving section 24.

The expression "continuously detect" stated herein means that not only the two states, i.e., the fully open state and the fully closed state but also states intermediate between them are detected. The intermediate states may be detected with analog continuity. Alternatively, they may be detected in a digital manner, i.e., in a stepwise manner (phased manner). It should however be noted that the intermediate states are preferably detected in the digital manner, i.e., in the stepwise manner (phased manner) in view of compatibility with digital control. The same is applied to the fourth modification.

As exemplified in Fig. 5A, the light blocking section 12A is tapered to have a reduced dimension toward a downstream end of the passage. The dashed circles **a, b, c, d, e, f** shown in Fig. 5A represent the position and range of a light receiving surface of the light receiving section 24 when viewed from the light emitting section 22. In the fully open state, the light receiving section 24 is located at the position of the circle a with respect to the valve element 10. Therefore, the amount of light received by the light receiving section 24 is the maximum value (100%). As the valve element 10 moves forward, and thereby closes the passage 20, the position of the light receiving section 24 with respect to the valve element 10 varies, and shifts to the positions **b, c, d, e, f**. Meanwhile, the amount of light received by the light receiving section 24 varies and takes the values of, for example, 80%, 60%, 40%, 10% and 0% according to the positions. Accordingly, the position of the valve element 10 can be continuously detected based on the amount of light received by the light receiving section 24. It should be noted a subject that carries out this detection may be the controller 50 or another controller separately provided.

The above-described modified arrangement and the same control method as of the example of the first embodiment are applicable to the third modification. The third modification may be combined with the second modification.

The flow control valve according to the fourth modification has the same configuration as that of the flow control valve 100 of the example of the first embodiment except that the light blocking section 12 is replaced by a light blocking section 12B that is different in shape. Those constituent elements common to the flow control valve of the fourth modification and the flow control valve 100 are represented by the same reference numerals and names and a detailed description thereof will not be given in repetition.

In the flow control valve of the fourth modification, the light blocking section 12B has a plurality of holes 11, 13, 15 aligned along the moving direction of the valve element 10 so that the amount of light received by the light receiving section 24 from the light emitting section 22 alternately takes the maximal value and the minimal value, and based on the amount of light received by the light receiving section 24, the position of the valve element 10 can be continuously detected from the fully open state to the fully closed state.

As exemplified in Fig. 5B, the light blocking section 12B has the same outer shape as that of the light blocking section 12 but is provided with three holes 11, 13, 15 which penetrate the light blocking section in the direction of a straight line connecting the light emitting section 22 and the light receiving section 24. The dashed circles a, b, c, d, e, f shown in Fig. 5B represent the position and range of the light receiving surface of the light receiving section 24 when viewed from the light emitting section 22. In the fully open state, the light receiving section 24 is located at the position of the circle a with respect to the valve element 10. Therefore, the amount of light received by the light receiving section 24 is the maximum value (100%). As the valve element 10 moves forward and thereby closes the passage 20, the position of the light receiving section 24 with respect to the valve element 10 shifts to the positions **b, c, d, e, f**. Meanwhile, the amount of light received by the light receiving section 24 varies and takes the values of, for example, 80% (maximal value), 0% (minimal value), 80% (maximal value), 0% (minimal value), and 80% (maximal value) according to the positions. Based on the amount of light received by the light receiving section 24 which varies in a pulsed manner, the position of the valve element 10 can be continuously detected by counting the number of times of increase and decrease in the amount of light. It should be noted the subject that carries out this detection may be the controller 50 or another controller independently provided. The maximal value and the minimal value may differ from each other.

The above-described modified arrangement and the same control method as of the example of the first embodiment are applicable to the fourth modification. The fourth modification may be combined with the second modification.

### (Second Embodiment)

According to the second embodiment, there is provided a control method for a flow control valve which method may be used for any of the device configurations described in the first embodiment and the example and modifications thereof. Therefore, a detailed description of the configuration of the flow control valve adopted in the second embodiment will not be given in repetition. For the sake of convenience, for example, the second embodiment will be described assuming that the flow control valve has the same configuration as that of the example of the first embodiment (the third embodiment and its modification will be described in the same way).

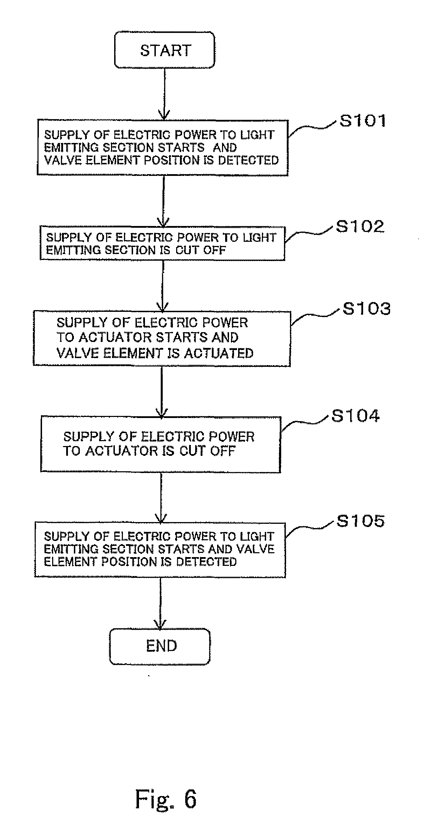

Fig. 6 is a flow chart showing one example of a control method for a flow control valve according to the second embodiment. The operation shown in the flow chart is executed by, for example, the controller 50 but may be executed by another controller that is provided separately from the controller 50 or operates in cooperation with the controller 50 (the same is applicable to the third embodiment and its modification).

As shown in Fig. 6, in the control method of the flow control valve according to the second embodiment, after execution of a program for actuating the valve element 10 starts (START), electric power is first supplied to the light emitting section 22, thereby causing the light emitting section 22 to emit light, and then the position of the valve element 10 is detected based on the amount of light received by the light receiving section 24 (STEP S101).

Subsequently, the supply of electric power to the light emitting section 22 is cut off (STEP S102), and then supply of electric power to the actuator 16 starts, thereby actuating the valve element 10 (STEP S103).

Subsequently, the supply of electric power to the actuator 16 is cut off (STEP S104). Supply of electric power to the light emitting section 22 starts, thereby causing the light emitting section 22 to emit light. Based on the amount of light received by the light receiving section 24, the position of the valve element 10 is detected (STEP S105). Upon the detection, the actuation of the valve element 10 is ended (END).

For example, when opening the flow control valve in its closed state, it is confirmed that the valve is in its closed state at STEP S101. Thereafter, the valve element 10 is actuated at STEP S 103 and, finally, it is confirmed at STEP S105 whether or not the valve element 10 has moved to a desired position.

With the above configuration, the valve element can be surely moved to a desired position. Further, unnecessary supply of electric power to the light emitting section 22 and the actuator 16 can be avoided to reduce power consumption. It should be noted that the light emission of the light emitting section 22 may not be necessarily initiated at STEP S101 but may have already been done at the stage of STEP S101.

### (Third Embodiment)

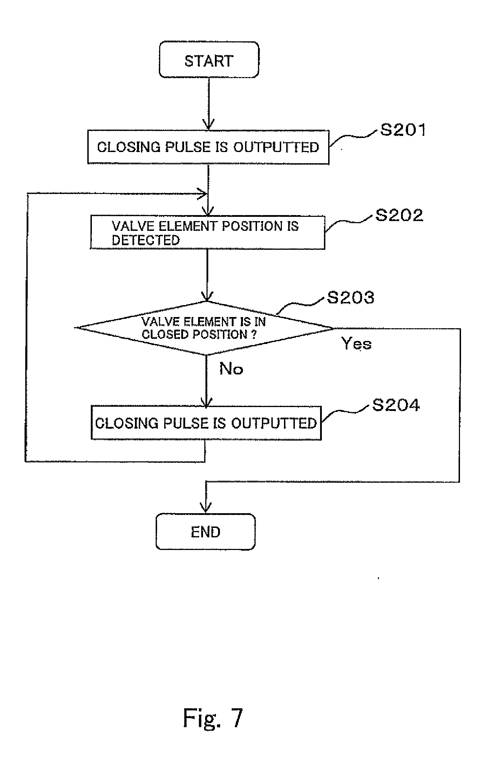

Fig. 7 is a flow chart showing one example of a control method for a flow control valve according to a third embodiment. As shown in Fig. 7, in the control method of a flow control valve according to the third embodiment, after execution of a program for closing the flow control valve starts (START), the controller 50 firstly outputs a pulse signal (closing pulse) to the actuator 16 for moving the valve element 10 to the closed position (e.g., the position of the valve element 10 shown in Fig. 1B) (STEP S201). In this way, the valve element 10 is actuated.

Next, the position of the valve element 10 is detected based on the amount of light received by the light receiving section 24 (STEP S202). It is then determined, based on the detection result, whether the valve element 10 is in its closed position (STEP S203). If the result of the determination is YES, the closing of the flow control valve is ended (END).

On the other hand, if the result of the determination is NO, a closing pulse is outputted again (STEP S204), thereby actuating the valve element 10. Then, the process returns to STEP S202 to detect the position of the valve element 10 again.

The above method makes it possible to surely close the flow control valve.

The control method of a flow control valve of the third embodiment may be executed in combination with the control method of a flow control valve of the second embodiment.

### (Modification)

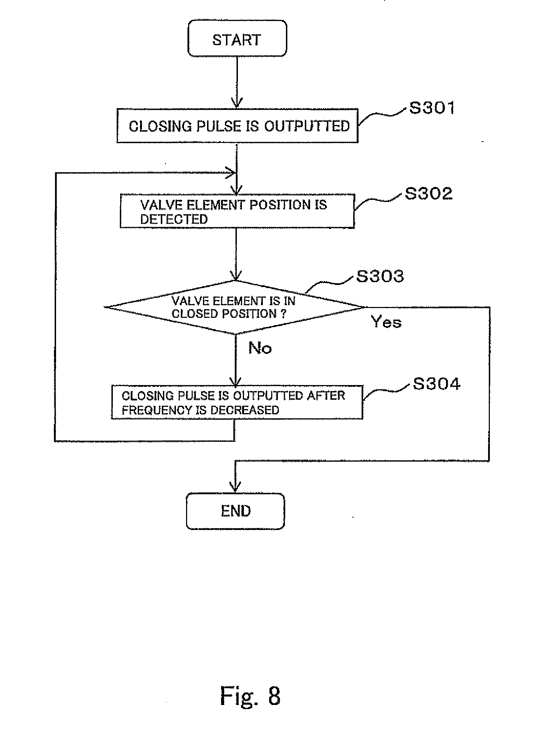

Fig. 8 is a flow chart showing one example of a control method for a flow control valve according to a modification of the third embodiment. As shown in Fig. 8, in the control method of a flow control valve according to the modification of the third embodiment, after execution of the program for closing the flow control valve starts (START), a pulse signal (closing pulse) for moving the valve element 10 to the closed position (e.g., the position of the valve element 10 shown in Fig. 1B) is firstly outputted from the controller 50 to the actuator 16 (STEP S301). This causes actuation of the valve element 10.

Next, the position of the valve element 10 is detected based on the amount of light received by the light receiving section 24 (STEP S302). It is then determined based on the detection result whether the valve element 10 is in the closed position (STEP S303). If the result of the determination is YES, the closing of the flow control valve is ended (END).

On the other hand, if the result of the determination is NO, a frequency of the pulse is reduced to increase torque of a pulse motor that constitutes the actuator 16, and in this state, a closing pulse is outputted again (STEP S304), thereby actuating the valve element 10. Subsequently, the process returns to STEP S302 to detect the position of the valve element 10 again.

The above method makes it possible to close the flow control valve more surely.

The control method of a flow control valve according to the modification of the third embodiment may be executed in combination with the control method for a flow control valve according to the second embodiment.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

The flow control valve of the invention is useful as a flow control valve capable of detecting a position of a valve element with a method which was not implemented conventionally

### Reference Signs List

- 10:: valve element
- 11:: hole
- 12:: light blocking section
- 13:: hole
- 14:: drive shaft
- 15:: hole
- 16:: actuator
- 20:: passage
- 21:: photointerrupter
- 22:: light emitting section
- 24:: light receiving section
- 50:: controller
- 100:: flow control valve
- 200:: flow control valve
- 300:: flow control valve

## Claims

1. A flow control valve comprising:
a light emitting section for emitting light;
a light receiving section disposed so as to face the light emitting section, for detecting an amount of light received from the light emitting section; and
a valve element for opening and closing a passage;
wherein the valve element or a light blocking section secured to the valve element moves in a transverse direction between the light emitting section and the light receiving section, as the passage is opened or closed, the amount of light received by the light receiving section from the light emitting section varies in accordance with a position of the valve element, and the position of the valve element is detected based on the amount of light received by the light receiving section.

2. A method for controlling the flow control valve described in claim 1, the method comprising:
a first step of causing the light emitting section to emit light and detecting the position of the valve element based on the amount of light received by the light receiving section;
a second step of cutting off supply of electric power to the light emitting section, subsequently to the first step;
a third step of starting supply of electric power to an actuator connected to the valve element to actuate the valve element, subsequently to the second step;
a fourth step of cutting off the supply of electric power to the actuator, subsequently to the third step; and
a fifth step of causing the light emitting section to emit light and detecting the position of the valve element based on the amount of light received by the light receiving section, subsequently to the fourth step.

3. The flow control valve according to claim 1,
wherein the valve element has the light blocking section formed so as to project along a moving direction of the valve element; and
wherein the light blocking section moves between the light emitting section and the light receiving section, as the passage is opened or closed, the amount of light received by the light receiving section from the light emitting section varies in accordance with the position of the valve element, and the position of the valve element is detected based on the amount of light received by the light receiving section.

4. A method of controlling the flow control valve described in claim 1, the method comprising:
a fifth step of actuating the valve element by transmitting a pulse for closing the passage to a stepping motor connected to the valve element;
a sixth step of detecting the position of the valve element based on the amount of light received by the light receiving section subsequently to the fifth step;
a seventh step of determining whether the position of the valve element detected at the sixth step is a position where the passage is closed; and
an eighth step for actuating the valve element by transmitting a pulse for closing the passage again to the stepping motor if a result of the determination made at the seventh step is NO.

5. A method of controlling the flow control valve described in claim 1, the method comprising:
a fifth step for actuating the valve element by transmitting a pulse for closing the passage to a stepping motor connected to the valve element;
a sixth step for detecting the position of the valve element based on the amount of light received by the light receiving section, subsequently to the fifth step;
a seventh step for determining whether the position of the valve element detected at the sixth step is a position where the passage is closed; and
a ninth step for actuating the valve element by transmitting a pulse for closing the passage again to the stepping motor after decreasing a frequency of the pulse to a value lower than a value of a frequency of the pulse transmitted in the fifth step, if a result of the determination made at the seventh step is NO.

6. The flow control valve according to claim 3,
wherein the light blocking section is tapered to have a reduced dimension in a moving direction of the valve element to continuously vary the amount of light received by the light receiving section from the light emitting section in accordance with the position of the valve element, and as a result, the position of the valve element is continuously detected from its fully open state to its fully closed state based on the amount of light received by the light receiving section.

7. The flow control valve according to claim 3,
wherein the light blocking section has a plurality of holes aligned in a moving direction of the valve element such that the amount of light received by the light receiving section from the light emitting section alternately takes a maximal value and a minimal value, and as a result, the position of the valve element is continuously detected from its fully open state to its fully closed state based on the amount of light received by the light receiving section.
